# EUROPEAN PATENT SPECIFICATION

(11) **EP 1 014 805 B1**
(45) Date of publication and mention of the grant of the patent: **13.08.2008**
(21) Application number: 97942618.6
(22) Date of filing: 18.09.1997
(51) Int. Cl.: A23G 4/06, A23L 1/22, A23L 2/56, A61K 9/68

(54) **CHEWING GUM CONTAINING PHYSIOLOGICAL COOLING AGENTS**
KAUGUMMI, ENTHALTEND PHYSIOLOGISCH KÜHLENDE WIRKSTOFFE
CHEWING-GUM CONTENANT DES AGENTS RAFRAICHISSANTS PHYSIOLOGIQUES

(43) Date of publication of application: 05.07.2000
(60) Divisional application: 08005710.2
(73) Proprietor: WM. WRIGLEY JR. COMPANY, Chicago, Illinois 60611 (US)
(72) Inventor: WOLF, Fred, R., Naperville, IL 60450 (US); McGREW, Gordon, N., Evanston, IL 60201 (US); HOOK, Jeffrey, S., Berwyn, IL 60402 (US); RICHEY, Lindell, C., Lake Zurich, IL 60047 (US); PATEL, Mansukh, M., Downers Grove, IL 60515 (US); YATKA, Robert, J., Orland Park, IL 60462 (US); WITKEWITZ, David, L., Bridgeview, IL 60455 (US); GREENBERG, Michal, J., Northbrook, IL 60062 (US); TYRPIN, Henry, T., Palos Park, IL 60464 (US); NELSON, Kathryn, T., Chicago, IL 60614 (US)
(74) Representative: Hayes, Adrian Chetwynd
(86) International application number: PCT/US1997/016731
(87) International publication number: WO 1999/013734

(56) References cited:
- EP-A- 0 485 170
- WO-A-96/17524
- WO-A-96/28133
- WO-A-97/04666
- WO-A-97/06695
- WO-A-97/07771
- WO-A-97/24036
- US-A- 4 029 759
- US-A- 4 153 679
- US-A- 4 317 838
- US-A- 4 724 151
- US-A- 5 128 155
- US-A- 5 326 574
- US-A- 5 372 824
- US-A- 5 376 389
- 'Pfefferminzöle' RÖMPP ONLINE, [Online] Retrieved from the Internet: <URL:http://www.roempp.com/thieme-chemistry /roempp/prod/roempp.php> [retrieved on 2006-09-12]

## Description

### Background of the Invention

The present invention relates to chewing gum compositions. More particularly, the invention relates to cooling flavor compositions comprising physiological cooling agents and chewing gum containing such cooling flavor compositions. Preferably the physiological cooling agents are used in combination or have been treated to control their release and enhance shelf life stability.

In recent years, efforts have been devoted to controlling release characteristics of various ingredients in chewing gum. Efforts have been directed at perfecting the use of high-intensity sweeteners within the chewing gum formulation, to thereby increase the shelf-life stability of the ingredients, i.e., the protection against degradation of the high-potency sweetener over time.

Patent Cooperation Treaty Publication No. 89-03170 discloses a method of controlling the release of acesulfame K In this process, the sweetener is encapsulated fully or partially to modify the release rate in chewing gum.

Other patent publications disclose how a sweetener like aspartame can be physically modified to control its release rate in chewing gum.

For example, U.S. Patent No. 4,597,970 to Sharma et al. teaches a process for producing an agglomerated sweetener wherein the sweetener is dispersed in a hydrophobic matrix consisting essentially of lecithin, a glyceride and a fatty acid or wax having a melting point between 25 and 100°C. The disclosed method uses a spray congealing step to form the sweetener-containing matrix into droplets, followed by a fluid-bed second coating on the agglomerated particles.

U.S. Patent Nos. 4,515,769 and 4,386,106, both to Merrit et al., teach a two step process for preparing a delayed release flavorant for chewing gum. In this process, the flavorant is prepared in an emulsion with a hydrophilic matrix. The emulsion is dried and ground and the particles are then coated with a water-impermeable substance.

U.S. Patent No. 4,230,687 to Sair et al. teaches a process for encasing an active ingredient to achieve gradual release of the ingredient in a product such as chewing gum. The described method involves adding the ingredient to an encapsulating material in the form of a viscous paste. High shear mixing is used to achieve a homogeneous dispersion of the ingredient within the matrix, which is subsequently dried and ground.

U.S. Patent No. 4,139,639 to Bahoshy et al. teaches a process of "fixing" aspartame by co-drying (by spray drying or fluid bed coating) a solution containing aspartame and an encapsulating agent, such as gum arabic, to thereby surround and protect the aspartame in the gum during storage.

U.S. Patent No. 4,384,004 to Cea et al. teaches a method of encapsulating aspartame with various solutions of encapsulating agents using various encapsulation techniques, such as spray drying, in order to increase the shelf stability of the aspartame.

U.S. Patent No. 4,634,593 to Stroz et al. teaches a method for producing controlled release sweeteners for confections, such as chewing gum. The method taught therein involves the use of an insoluble fat material which is mix mulled with the sweetener.

Several known compounds have what can be characterized as a "cooling" activity, and are referred to in the art as "physiological cooling agents." Physiological cooling agents are perceived as cold or cool when contacted with the human body and, in particular, with the mucous membranes of the mouth, nose and throat.

Efforts have been directed at perfecting the use of physiological cooling agents within chewing gum formulations to enhance flavor composition and control their release to enhance the flavor of chewing gum.

U.S. Patent No. 5,326,574 discloses a process for codrying the physiological cooling agent 3-1-menthoxypropane-1,2-diol with a food acceptable, water-soluble carrier and mixing the resulting product into chewing gum.

US 5,372,824 A discloses mint flavored chewing gums having reduced bitterness, comprising e.g. mint oil with a reduced I-menthol content. In some examples a cooling agent is added.

Peppermint oil is currently used to create a "cooling" in oral products such as toothpaste, mouthwash, chewing gum, candy and other food products. Peppermint oil generally comprises about 45% menthol, about 20% menthone, about 5% menthyl acetate, about 5% eucalyptol and many other constituents. Peppermint oil is even used in non-peppermint products, such as spearmint or wintergreen flavored products, in order to create this desired cooling effect. However, peppermint notes are then found in the resulting non-peppermint flavored products.

Menthol is also known for its physiological cooling effect on the skin and mucous membranes of the mouth. Being a major constituent of peppermint oil, menthol has been used extensively in foods, beverages, dentrifices, mouthwashes, toiletries, lotions and the like. The disadvantages of using menthol, however, are its strong minty odor and the harsh notes it imparts to compositions in which it is found.

A need, therefore, exists for a cooling flavor composition that will contribute a long-lasting cooling sensation to products in which it is found without the unwanted harshness or flavor characteristics that come from adding menthol.

It would be desirable to provide a high flavor impact chewing gum that does not manifest the harsh notes normally associated with some chewing gum. It would also be desirable to provide a clean, high-quality flavor chewing gum with a good cooling effect.

The present invention preferably also relates to a coated chewing gum. Chewing gums are frequently covered with hard or soft coatings. The coatings provide an opportunity for the manufacturer to vary the taste, appearance, mouth-feel and nutritional value of the chewing gum.

For example, some consumers prefer a burst of intense flavor over the slow, gentle flavor release normally associated with chewing gum. In order to provide a favorable flavor impact, gum manufacturers have added flavors to the coating of a coated chewing gum. These flavors include spearmint flavor, Peppermint flavor, wintergreen flavor and fruit flavors. In addition, very strong flavors such as menthol have often been used to provide a burst of flavor. However, at concentrations effective to provide a burst of flavor, menthol or mint flavors also manifest a bitter, harsh, burning taste (hereinafter "harsh notes").

The harsh notes are particularly acute with sugarless gum. In the case of coated gum with sugar, the sugar masks many of the harsh notes of menthol and mint flavors (although high levels of menthol or mint flavors can still manifest the harsh notes). However, recent efforts to produce sugarless coated gums have highlighted the difficulties of providing an initial burst of flavor without the harsh notes associated with traditional flavoring.

One method to alleviate the problem of harsh notes in sugarless coated chewing gum is the use of xylitol as a coating material. Xylitol has a sweetness level equivalent to sugar, and produces a cooling effect due to its endothermic heat of solvation. It produces a clean, high-quality flavor with a good cooling effect, particularly when it is used with menthol and mint flavors.

Coating with xylitol is described in U.S. Patent No. 4,105,801; U.S. Patent No. 4,127,677; U.S. Patent No. 4,681,766; U.S. Patent No. 4,786,511; and U.S. Patent No. 4,828,845.

The disadvantage of xylitol is that it is an expensive ingredient Many efforts have been made to replace xylitol with a less expensive sugarless polyol. The most common and lowest cost polyol used in chewing gum is sorbitol. However, panning with sorbitol has been very difficult since it is hygroscopic and does not readily crystallize.

A number of patents have been published that use various procedures to coat with sorbitol, including G.B. Patent No. 2,115,672; U.S. Patent No. 4,317,838; and U.S. Patent No. 4,753,790. A successful sorbitol hard coating was reported in U.S. Patent No. 4,423,086, particularly when the sorbitol was at least 99% D-sorbitol. However, the quality of coating never approached the quality of typical xylitol coatings.

Other coating patents that teach alternative polyols to xylitol include: U.S. Patent No. 4,840,797, which discloses a maltitol coating which required over 95% maltitol to obtain a good quality coating on pellet gum; U.S. Patents Nos. 5,248,508 and 4,792,453, which disclose a hydrogenated isomaltulose coating; and U.S. Patent No. 5,603,970, which discloses an erythritol coating.

Still other patents teach partially replacing the xylitol with sorbitol, lactitol, or maltitol. However, these cannot be applied in the same solution, but must be applied by alternating solutions. In other words, a solution of one polyol is applied, then another solution of another polyol is applied. These patents include: U.S. Patent No. 5,270,061; U.S. Patent No. 5,376,389; PCT Application Nos. PCT/US93/09354 (published as WO95/08925); PCT/US94110406 (published as WO95/07625); and PCT/US93/08730 (published as WO95/07622).

A booklet entitled "The Evaluation of Chewing Gum -- Xylitol and the Prevention of Dental Caries" published in 1985 by Xyrofin describes a coating formed by panning with a solution containing xylitol and up to 10% sorbitol. U.S. Patent No. 5,536,511 discloses a coating that comprises co-crystallized xylitol and erythritol. In an approach different from panning from a solution, U.S. Patent No. 4,146,653 discloses a molten blend of xylitol and sorbitol that are used to form a coating.

U.S. Patent No. 5,409,715 discloses coating chewing gum with various materials, including waxes, lipids, fatty acids, fats, oils, cellulose derivatives, modified starch, dextrin, gelatin, zein, vegetable gums, proteins, edible polymers, edible plastic film, maltodextrins, polyols, low calorie carbohydrate bulking agents, shellac and combinations thereof.

It would be desirable to provide a high flavor impact chewing gum coating that does not manifest the harsh notes normally associated with such coatings. It would also be desirable to provide a clean, high-quality flavor coated chewing gum with a good cooling effect, while reducing or eliminating the xylitol currently preferred in sugarless coatings.

### Summary of the Invention

This invention incorporates a physiological cooling agent or combination of physiological cooling agents into a chewing gum. One preferred embodiment of the invention provides a chewing gum having a clean, cool sensation imparted by a cooling flavor composition that includes a physiological cooling agent. Another preferred embodiment also contains a flavor, and a combination of physiological cooling agents which have been treated so as to modify their release from the chewing gum. The result is a synergy between the physiological cooling agents and the flavor, which provides a high flavor impact at a lower concentration of flavor. Thus, with either or both aspects of the present invention, chewing gum can be made with a long lasting cooling sensation without unwanted harshness or flavor characteristics. The gum may have a high flavor impact, as well as a clean, high quality flavor with good cooling effect.

In the first aspect, applicants have discovered that using menthol and menthone in combination with one or more physiological cooling agents provides optimal cooling without unwanted flavor characteristics. Adding the physiological cooling agent provides the chewing gum with an unexpected, high-flavor impact where the harsh notes have been reduced or eliminated. This is particularly valuable for sugarless chewing gum where the harsh notes of the flavor are not masked by sugar.

In this first aspect, the invention is directed to cooling flavor compositions that provide the desired "cooling" sensation but not the unwanted harshness and flavor characteristics. The cooling flavor compositions of the present invention replace some or all of the peppermint oil presently used to create a "cooling." Because the cooling flavor compositions use menthol and menthone, as opposed to peppermint oil, the cooling flavor compositions do not add unwanted peppermint notes.

In addition, the physiological cooling agent provides a cooling sensation similar to that associated with gum made from xylitol. Consequently, a lower cost polyol can be used as a chewing gum material without sacrificing the clean, high-quality, cooling sensation ordinarily associated with xylitol.

In one embodiment, the invention is a cooling flavor composition comprising:
a) 40% to 80% by weight menthol;
b) 15% to 50% by weight menthone; and
c) 3% to 25% by weight of at least one physiological cooling agent selected from the group consisting of menthyl succinates; acyclic carboxamides; menthyl lactate; 3-1-menthoxypropane-1,2-diol; N-substituted p-menthane carboxamides; menthone glycerol ketals and mixtures thereof.

In a second aspect, the invention is an oral composition, such as chewing gum, comprising a flavor and a cooling flavor composition comprising:
a) 40% to 80% by weight menthol;
b) 15% to 50% by weight menthone; and
c) 3% to 25% by weight of at least one physiological cooling agent selected from the group consisting of menthyl succinate; acyclic carboxamides; menthyl lactate; 3-I-menthoxypropane-1,2-diol; N-substituted p-menthane carboxamides; menthone glycerol ketals and mixtures thereof.

In this embodiment, the cooling flavor compositions are used in chewing gum to improve the "cool" sensation perceived upon chewing the gum and to extend the duration of the "cool" sensation.

In other embodiments of the invention, the cooling flavor compositions may also be used in other comestibles or even topical produces such as creams and lotions_{.}

The controlled release combination of physiological cooling agents can be obtained by modifying the cooling agents by encapsulation, partial encapsulation or partial coating, entrapment or absorption with water-soluble materials or water-insoluble materials. The procedures for modifying the physiological cooling agents include spray drying, spray chilling, fluid-bed coating, coacervation, extrusion, and other agglomerating and standard encapsulating techniques. The cooling agents may also be absorbed onto an inert or water-insoluble material. The cooling agents may be modified in a multiple step process comprising any of the processes noted.

The combination of cooling agents, or the combination of cooling agents when modified, give a chewing gum a controlled-release cooling agent. A higher quantity of cooling agents can be used without resulting in a high initial cooling agent impact, but instead having a delayed cooling release in chewing gum, giving a highly consumer acceptable chewing gum product. Some cooling agents have a very slow release, but may be modified to give a fast release for more initial impact.

The physiological cooling agent can be incorporated into the coating of a coated chewing gum.

A chewing gum coating can be provided having a clean, cool sensation in which xylitol is replaced, in part or in whole, by a less expensive coating material.

A flavor can also be present, where the synergy between the physiological cooling agent and the flavor provides a high flavor impact at a lower concentration of flavor. Adding the physiological cooling agent provides the coated chewing gum with an unexpected, high-flavor impact where the harsh notes have been reduced or eliminated. This is particularly valuable for sugarless chewing gum where the harsh notes of the flavor are not masked by sugar.

In addition, the physiological cooling agent provides a cooling sensation similar to that associated with coatings made from xylitol. Consequently, a lower cost polyol can be used as a chewing gum coating material without sacrificing the clean, high-quality, cooling sensation ordinarily associated with xylitol coatings.

The foregoing and other features and advantages of the present invention will become apparent from the following detailed description of the presently preferred embodiments, when read in conjunction with the accompanying examples.

### Brief Description of the Drawings

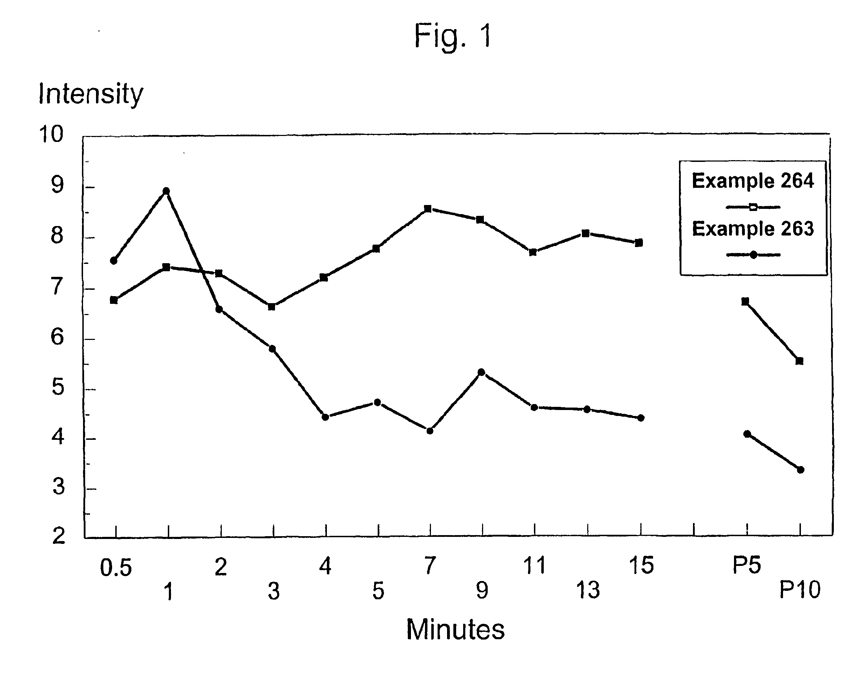

FIG. 1 is a graph showing a rating of perception of fresh breath over time after chewing comparative and inventive gum samples.

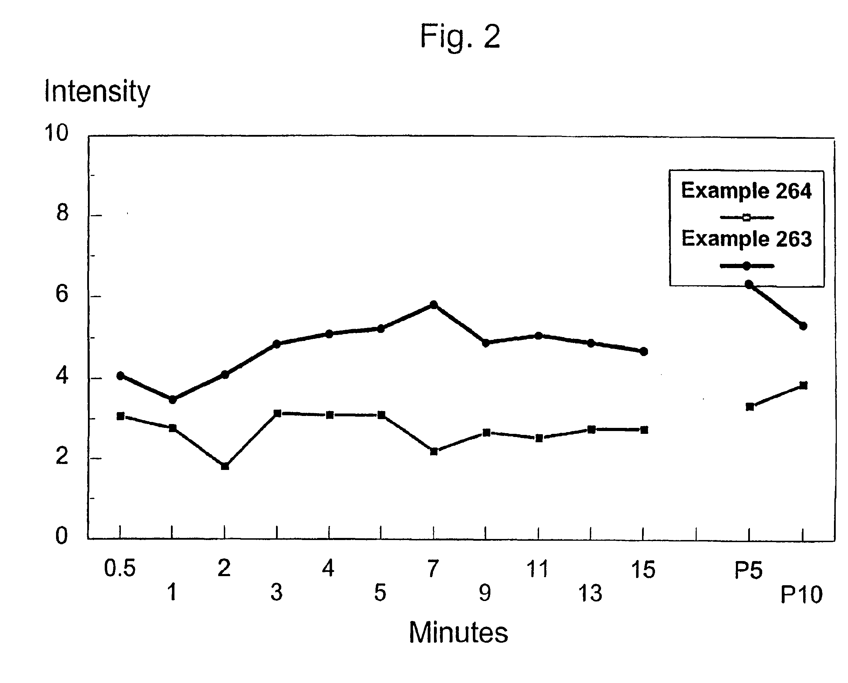

FIG. 2 is a graph showing a rating of perceived breath odor over time after chewing comparative and inventive gum samples.

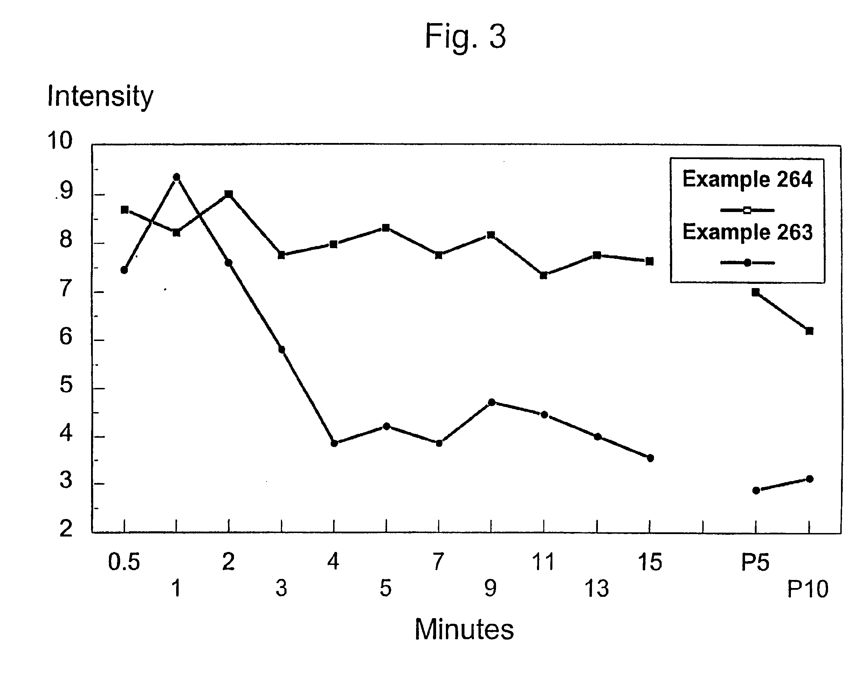

FIG. 3 is a graph showing a rating of perceived effectiveness for breath freshening over time after chewing comparative and inventive gum samples.

### Detailed Description of the Presently

### Preferred Embodiments of the Invention

In the context of this invention, chewing gum refers to chewing gum, bubble gum and the like. Moreover, all percentages are based on weight percentages unless otherwise specified. Further, although some terms are referred to in the singular, it is understood that such references may also encompass the plural. For examples, although chewing gum coating is referred to in the singular, it is understood that coated chewing gum normally contains multiple layers of coating. Therefore a phrase that refers to "the coating," refers to one or more layers of coating.

The composition of a chewing gum tends to suppress the release of its flavors. Although a slow flavor release is desirable in many instances, some consumers prefer a burst of intense flavor. One method to provide a chewing gum with a greater flavor impact is the addition of encapsulated flavor to a chewing gum. For example, for a cool and refreshing taste, cooling flavors such as encapsulated menthol and/or mint flavors are added to chewing gum. A menthol/mint combination is disclosed in U.S. Patent No. 4,724,151.

However, the improved flavor impact of adding cooling flavors to the chewing gum is somewhat offset by the disadvantage of the bitter, harsh, burning sensations associated with high concentrations of such flavors. This disadvantage is particularly acute for sugarless gum, since sugar tends to mask the harsh notes.

The inventors have found that adding a combination of physiological cooling agents or a combination of cooling agents that have a modified release from the chewing gum provides a favorable flavor impact. As a result, the inventors are able to reduce or eliminate the harsh notes associated with the prior art high flavor-impact chewing gums, even in the case of sugarless chewing gums.

By adding a combination of physiological cooling agents to a menthol or mint type flavored chewing gum, one can obtain a strong cooling and clean minty flavor, without the higher concentrations of menthol or mint flavors required in the prior art. Also, the fast release encapsulation of a combination of physiological cooling agents complement the mint flavors to give a high impact of flavor and cooling normally found in chewing gum. This cooling effect is like menthol cooling, but without the bitterness associated with menthol.

For sugarless gums, chewing gums containing xylitol have become very popular because xylitol has about the same sweetness level as sugar and a cooling ability due to its endothermic heat of solvation. With this sweetness, xylitol masks the harsh notes of high impact flavors such as menthol and mint flavors. At the same time, its cooling effect complements the cooling effect of the cooling flavors. As a result, xylitol provides-a clean, high-quality cooling effect. Xylitol in combination with physiological cooling agents give chewing gum a high quality flavor profile with good cooling. However, because of its expense, various efforts have been made to replace xylitol in coatings with a less expensive ingredient, such as another polyol.

Another method to provide a chewing gum with a greater flavor impact is the addition of flavor to the coating of a coated chewing gum. For example, for a cool and refreshing taste, cooling flavors such as menthol and/or mint flavors are added to the coating of chewing gum.

However, the improved flavor impact of adding cooling flavors to the chewing gum coating is somewhat offset by the disadvantage of the bitter, harsh, burning sensations associated with high concentrations of such flavors. This disadvantage is particularly acute for sugarless gum, since sugar tends to mask the harsh notes.

Adding a physiological cooling agent to a coating provides a favorable flavor impact. As a result, it is possible to reduce or eliminate the harsh notes associated with the prior art high flavor-impact coated chewing gums, even in the case of sugarless, coated chewing gums.

By adding a physiological cooling agent to a menthol or mint type flavored chewing gum coating, one can obtain a strong cooling and dean minty flavor, without the higher concentrations of menthol or mint flavors required in prior art coatings. Also, the physiological cooling agents complement the mint flavors to give a high impact of flavor and cooling normally found in coated chewing gum. This cooling effect is like menthol cooling, but without the bitterness associated with menthol.

Coated chewing gums may be made with a variety of chewing gum compositions. The chewing gum is prepared as conventional chewing gum, but formed into pellets or balls. The pellets/balls can then be coated by a variety of methods known in the art, such as conventional panning methods to coat chewing gum. The coating is generally applied in multiple layers, where the composition of one layer is not necessarily the composition of the other layers.

The coating contains at least a coating material and a physiological cooling agent. It may also contain other ingredients such as flavors, artificial sweeteners and dispersing agents, coloring agents, film formers and binding agents.

Coating material constitutes the substantial portion of the chewing gum coating. Examples of coating material include sugars such as sucrose, maltose, dextrose and glucose syrup; polyols such as maltitol, lactitol, xylitol, mannitol, erythritol, sorbitol, hydrogenated isomaltulose and hydrogenated starch hydrolysates; and combinations thereof.

For sugarless gums, xylitol coatings have become very popular because xylitol has about the same sweetness level as sugar and a cooling ability due to its endothermic heat of solvation. With this sweetness, xylitol masks the harsh notes of high impact flavors such as menthol and mint flavors. At the same time, its cooling effect complements the cooling effect of the cooling flavors. As a result, xylitol provides a clean, high-quality cooling effect. When used with physiological cooling agents, a synergistic cooling effect may be noted with xylitol. However, because of its expense, various efforts have been made to replace xylitol in coatings with a less expensive ingredient, such as another polyol.

One problem with polyol substitutes for xylitol is that they are generally much less sweet than xylitol or sugar. In the presence of high levels of flavor, the polyol substitutes generally provide a coated product with a bitter, unpleasant taste. To some degree, high intensity sweeteners may be used to counteract bitterness, but these also may have some objectionable taste. Also, some of these polyols themselves may contribute to a bitter taste.

By using physiological cooling agents in a coating that comprises polyols other than xylitol, the coating manifests a cooling similar to xylitol cooling. Thus xylitol substitutes, which cost significantly less than xylitol, can be used to coat gum and give a taste sensation similar to xylitol.

Many of the coating material references cited above contemplate the addition of one or more flavors to chewing gum coating. However, none disclose the addition of a physiological cooling agent to give the coating a cooling sensation like that of xylitol.

By using a combination of physiological cooling agents treated to have a modified release in a chewing gum that comprises polyols other than xylitol, the effect is a cooling similar to xylitol cooling. Thus xylitol substitutes, which cost significantly less than xylitol, can be used in gum and give a taste sensation similar to xylitol.

Physiological cooling agents encompasses any number of physiological cooling agents. However, in the context of this invention, the term "physiological cooling agent" does not include traditional flavor-derivatives such as menthol or menthone. Preferred physiological cooling agents do not have a perceptible flavor of their own, but simply provide a cooling effect.

Since the physiological cooling agents do not have their own perceptible flavor, they can be used with other types of flavors to offer new and unique advantages, such as breath freshening. Most confectionery products which are promoted for breath freshening are mint flavored products which contain moderate to high levels of menthol. Menthol is a component of peppermint oil which has a cooling property which provides to the consumer a perception of freshness in the oral cavity.

While there are references that disclose the use of physiological cooling agents in chewing gum and other confections, unique combinations and controlled release are new areas of interest. Also, no references disclose the use of physiological cooling agents in a chewing gum coating. Because a flavor imparts a distinct and unique sensation when it is used in a chewing gum, some combinations of the physiological cooling agents offer unique advantages and may be combined with various types of flavors or with various methods of encapsulation and entrapment for controlled release.

Several U.S. and foreign references disclose specific compounds and classes of compounds that are physiological cooling agents that may be used in the present invention. Some of these disclose the use of physiological cooling agents, in chewing gum. These include:
U.S. Patent No. 5,451,404 (a ketal combined with another coolant (menthol or carboxamides));
U.S. Patent No. 5,372,824 (physiological cooling agents and reduced menthol);
U.S. Patent No. 5,348,750 (menthone ketals);
U.S. Patent No. 5,326,574 (a spray dried 3-I-menthoxypropane-1,2-diol);
U.S. Patent No. 5,266,592 (menthone glycerol ketals);
U.S. Patent No. 5,165,943 (a cyclodextrin complex with physiological cooling agents);
U.S. Patent No. 5,009,893 (p-menthane carboxamide physiological cooling agent with menthol for reduced bitterness);
U.S. Patent No. 4,459,425 (3-1-menthoxypropane-1,2-diol);
U.S. Patent No. 4,296,093 (substituted cyclohexanamides);
U.S. Patents Nos. 4,248,859 and 4,318,900 (alkyl substituted alicyclic carboxylic acids, esters or amides);
U.S. Patents Nos. 4,157,384 and 4,029,759 (various 3-substituted p-menthanes);
U.S. Patent No. 4,081,480 (alpha-oxy(oxo)mercaptan alkanes);
U.S. Patent No. 4,070,449 (sulphoxides and sulphones);
U.S. Patents Nos. 4,060,091; 4,190,643 and 4,136,163 (substituted p-menthane-3-carboxamides);
U.S. Patents Nos. 4,153,679; 4,296,255 and 4,230,688 (acyclic carboxamides);
U.S. Patent No. 4,034,109 (acyclic sulphonamides and sulphinamides);
U.S. Patent No. 4,033,994 (p-menthane-3-carboxylates);
U.S. Patents Nos. 3,793,446 and 3,644,613 (ketoesters of menthol);
U.S. Patent No. 3,720,762 (spilanthol with menthol or peppermint oil);
Canadian Patent No. 2,101,790 (carbonic acids having free polar groups);
German Patent No. 2,608,226 (menthyl lactate);
German Patent No. 2,433,165 (N-acetylglycine menthyl ester);
French Patent No. 2,577,922 (L-menthyl-3-hydroxybutyrate);
Japanese Patent No. 94/065023 (2-isopropenyl-5-methylcyclohexanol);
Great Britain Patent No. 1,502,680 (bicyclic acids, esters, amides and substituted menthanols);
Great Britain Patent No. 1,476,351 (cyclic and acyclic amides, ureas and sulphonamides);
Great Britain Patent No. 1,442,998 (trialkyl-substituted cyclohexane carboxamides);
Great Britain Patents Nos. 1,421,744 and 1,421,743 (novel amides);
Great Britain Patent No. 1,411,786 (cyclohexanamides);
Great Britain Patent No. 1,404,596 (acyclic secondary and tertiary alkanols);
PCT Publication No. WO 97/07771 (menthyl succinate and carboxamides);
PCT Publication No. WO 96/28133 (coolant composition for- comestibles);
PCT Publication No. WO 96/17524 (a cooling composition comprising N-substituted p-menthane carboxamides and menthol);
PCT Publication No. WO 94/010117 (cyclohexanol derivatives); and U.S. Patent No. 3,639,569 (physiological cooling agents).

Particular examples of physiological cooling agents include:
1) substituted p-menthanes, substituted p-menthane-carboxamides (e.g., N-ethyl-p-menthane-3-carboxamide (FEMA 3455)), acyclic carboxamides, substituted cyclohexanamides, substituted cyclohexane carboxamides, substituted ureas and sulphonamides, and substituted menthanols (all from Wilkinson Sword);
2) hydroxymethyl and hydroxyethyl derivatives of p-menthane (from Lever Bros.);
3) menthyl succinate;
4) 2-mercapto-cyclo-decanone (from International Flavors and Fragrances):
5) 2-isopropanyl-5-methylcyclohexanol (from Hisamitsu Pharmaceuticals, hereinafter "isopregol");
6) hydroxycarboxylic acids with 2-6 carbon atoms;
7) menthone glycerol ketals (FEMA 3807, tradename FRESCOLAT^{™} type MGA):
8) 3-I-menthoxypropane-1,2-diol (from Takasago, FEMA 3784, (hereinafter "TCA"));
9) menthyl lactate; (from Haarman & Reimer, FEMA 3748, tradename FRESCOLAT^{™} type ML).

While any of the above-disclosed physiological cooling agents may be used in chewing gum, the physiological cooling agents used in the present invention are:
1) substituted p-menthane carboxamides (PMC), such as those disclosed in U.S. Patents Nos. 4,060,091; 4,190,643 and 4,136,163, all assigned to Wilkinson Sword, especially N-ethyl-p-menthane-3-carboxamide (called WS-3);
2) acyclic carboxamides (AC), such as those disclosed in U.S. Patents Nos. 4,296,255; 4,230,688; and 4,153,679; all assigned to Wilkinson Sword, especially N-2,3-trimethyl-2-isopropyl butanamide (called WS-23);
3) menthone glycerol ketal (MGK);
4) menthyl lactate (ML);
5) menthyl succinate (MS); and
6) 3-I-menthoxypropane-1,2-diol (TCA).

The concentration of physiological cooling agent will depend on the intensity of the physiological cooling agent and the desired cooling effect. In general the concentrations of cooling agents used is between 0.001% and 2% by weight of the chewing gum. The preferred concentration of cooling agent is between 0.01 % and 1.0%, more preferably between 0.02% and 0.5%.

The present invention contemplates that two or more physiological cooling agents may be added to the flavor used to make the chewing gum. On the other hand, the flavor and cooling agents may be added separately anywhere within the manufacturing process for making a chewing gum product.

These flavors include any flavor which is of food acceptable quality commonly known in the art such as essential oils, synthetic flavors or mixtures thereof. Such flavors include, but are not limited to, oils derived from plants and fruits such as citrus oils, fruit essences, peppermint oil, spearmint oil, eucalyptus, other mint oils, clove oil, oil of wintergreen, cinnamic aldehyde, anise and the like. Flavors that are very strong, such as menthol flavors, are also contemplated in this invention. Preferred flavors include cooling flavors such as peppermint, eucalyptus, menthol, wintergreen and fruity-mint; non-cooling flavors such as spearmint and cinnamon; and combinations thereof.

Artificial flavor components are also contemplated by the preset invention. Those of ordinary skill in the art will recognize that natural and artificial flavors may be combined in any sensorially acceptable blend. All such flavors and blends are contemplated by the present invention.

The flavor may be added to the chewing gum formula in an amount such that it will contain from about 0.1% to 10% flavor, preferably from about 0.2% to 3.0% flavor, and most preferably about 0.5% to 2% flavor.

For menthol flavored chewing gum, a combination of physiological cooling agents allows for a reduced overall concentration of menthol. However, it does not completely eliminate menthol, because menthol has a very identifiable unique taste and cooling sensation. Hence, in the case of menthol flavor, the physiological cooling agents only enhance the cooling while reducing the menthol bitterness.

The present invention thus is also directed to novel cooling flavor compositions comprising menthol and menthone that contribute a long-lasting cool sensation. These cooling flavor compositions may be substituted for peppermint oil in non-peppermint products, resulting in added coolness without harshness or unwanted flavor characteristics. They can, of course, also be used in peppermint flavored products.

It has been discovered that menthol, when used in conjunction with menthone, provides a cool sensation without the characteristically harsh tones of menthol. It has been further discovered that the use of menthol and menthone in combination with a physiological cooling agent results in a cooling flavor composition that provides initial optimal cooling, as well as extended coolness. The presence of only one of these components will not provide the desired results.

Menthol, which occurs naturally in peppermint oil, is the agent that provides the "cooling" sensation, but menthol alone tends to distort flavor notes. When used in conjunction with menthone, however, the result is cooling without harshness because the menthone helps to curb the harsh qualities of the menthol.

In one embodiment of the present invention, menthol and menthone are used in conjunction with one or more physiological cooling agents to produce a cooling flavor composition yielding optimal coolness. The menthol and menthone are used in their separated, or pure, form, as distinguished from being present in peppermint oil. Used as such, the menthol and menthone supply a fast release of the "cooling" sensation but do not add a peppermint flavor. These cooling flavor compositions, which have a physiological cooling effect, can be used in food, drinks, dentrifices, gargles, cosmetics, lotions, etc. Suitable physiological cooling agents that can be used in this aspect of the invention are menthyl succinate; menthyl lactate; 3-I-menthoxypropane-1,2-diol; menthone glycerol ketals; N-substituted p-menthane carboxamide; acyclic carboxamide and mixtures thereof. The preferred cooling agents are menthyl succinate, N-substituted p-menthane carboxamide (WS-3), acyclic carboxamide (WS-23) and menthyl lactate.

The cooling flavor composition comprising menthol, menthone and one or more physiological cooling agents is more potent than peppermint oil alone. As a result, less of the cooling blend is needed to achieve the desired coolness than peppermint oil. This would decrease the need for peppermint oil, a costly commodity which has an uncertain supply, saving money and conserving peppermint oil. However, if desired, peppermint oil may be added in addition to the cooling flavor compositions of the present invention.

In another embodiment, the cooling flavor composition comprising menthol, menthone and one or more physiological cooling agents is used in oral compositions such as chewing gum. The result is oral compositions having optimal cooling without harsh tones or unwanted flavor characteristics. Moreover, the blend of menthol, menthone and one or more synthetic cooing agents extends the coolness of the oral compositions in which the blend is used. This novel blend supplies a fast release of the cooling sensation from the menthol and menthone, and an extended release from the physiological cooling agents.

Because the cooling flavor compositions of the present invention will not impart an unwanted peppermint flavor to non-peppermint products, these compositions may be used to add coolness to fruit and other flavors.

Physiological cooling agents generally release slowly from chewing gum during the early stages of mastication of the gum because of their low solubility in water. However, some like TCA are moderately fast release, others like WS-3, WS-23 are moderately slow release, and others like menthone glycerol ketal, menthyl lactate and menthyl succinate are very slow release.

Combinations of cooling agents may not only be synergistic but may also provide both moderate release and slow release to give flavor impact and flavor extension. Physical modifications of the physiological cooling agents by encapsulation with another substrate will also modify their release in chewing gum by modifying the solubility or dissolution rate. Any standard technique which gives partial or full encapsulation of the combination of physiological cooling agents can be used. These techniques include, but are not limited to, spray drying, spray chilling, fluid-bed coating, and coacervation. These encapsulation techniques that give partial encapsulation or full encapsulation can be used individually or in any combination in a single step process or multiple step process. Generally, a modified release of physiological cooling agents is obtained in multistep processes like spray drying the combined physiological cooling agents and then fluid-bed coating the resultant powder.

The encapsulation techniques here described are standard coating techniques and generally give varying degrees of coating from partial to full coating, depending on the coating composition used in the process. Also, the coating compositions may be susceptible to water permeation to various degrees. Generally, compositions that have high organic solubility, good film forming properties and low water solubility give better delayed release of the physiological cooling agents. Such compositions include acrylic polymers and copolymers, carboxyvinyl polymer, polyamides, polystyrene, polyvinyl acetate, polyvinyl acetate phthalate, polyvinyl pyrrolidone and waxes. Although all of these materials are possible for encapsulation of physiological cooling agents, only food grade materials should be considered. Two standard food grade coating materials that are good film formers but not water soluble are shellac and Zein. Others which are more water soluble, but good film formers, are materials like agar, alginates, a wide range of cellulose derivative like ethyl cellulose and hydroxypropylmethyl cellulose, dextrin, gelatin and modified searches. These ingredients, which are generally approved for food use, may give a faster release when used as an encapsulant for the physiological cooling agents. Other encapsulants like acacia or maltodextrin can also encapsulate the physiological cooling agents, but give a faster release rate of the physiological cooling agents.

The amount of coating or encapsulating material on the cooling agents also controls the length of time for their release from chewing gum. Generally, the higher the level of coating and the lower the amount of active cooling agents, the slower the release of the cooling agents during mastication. To obtain the desired cooling agent release to blend with a gum's flavor release, the encapsulant should be a minimum of 20% of the coated cooling agents. Preferably, the encapsulant should be a minimum of 30% of the coated cooling agents, and most preferably should be a minimum of 40% of the coated cooling agents. Depending on the coating material, a higher or lower amount of coating material may be needed to give the desired release of cooling agents.

Another method of giving a delayed release of the physiological cooling agents is agglomeration with an agglomerating agent which partially coats the cooling agents. This method includes the step of mixing the cooling agents and agglomerating agent with a small amount of water or solvent The mixture is prepared in such a way as to have individual wet particles in contact with each other so a partial coating can be applied. After the water or solvent is removed, the mixture is ground and used as a powdered coated cooling agent.

Materials that can be used as the agglomerating agent are the same as those used in the encapsulation mentioned previously. However, since the coating is only a partial encapsulation, some agglomeration agents are more effective in delaying release than others. Some of the better agglomerating agents are the organic polymers like acrylic polymer and copolymers, polyvinyl acetate, polyvinyl-pyrrolidone, waxes, shellac and Zein. Other agglomerating agents are not as effective in giving a delayed release as are the polymers, waxes, shellac and Zein, but can be used to give some delayed release. These others agglomerating agents include, but are not limited to, agar, alginates, a wide range of cellulose derivatives, dextrin, gelatin, modified starches, and vegetable gums like guar gums, locust bean gum, and carrageenan. Even though the agglomerated cooling agents are only partially coated, when the quantity of coating is increased compared to the quantity of the cooling agents, the release can be delayed for a longer time during mastication. The level of coating used in the agglomerated product is a minimum of 5%. Preferably the coating level is a minimum of 15%, and more preferably about 20%. Depending on the agglomerating agent, a higher or lower amount of agent may be needed to give the desired release of cooling agents.

The physiological cooling agents may be coated in a two-step process or multiple step process. The physiological cooling agents may be encapsulated with any of the materials as described previously and then the encapsulated material can be agglomerated as described previously to obtain an encapsulated/agglomerated product that could be used in chewing gum to give a delayed release.

In another embodiment of this invention, the physiological cooling agents may be absorbed onto another component, often referred to as a carrier, which is porous and become entrapped in the matrix of the porous component Common materials used for absorbing the physiological cooling agents include, but are not limited to, silicas, silicates, pharmasorb clay, sponge-like beads or microbeads, amorphous carbonates and hydroxides, including aluminum and calcium lakes, vegetable gums and other spray dried materials.

Depending on the type of absorbent material and how it is prepared, the amount of the (physiological cooling agents that can be loaded onto the absorbent will vary. Generally materials like polymers or spongelike beads or microbeads, amorphous sugars, and alditols and amorphous carbonates and hydroxides absorb 10% to 40% of the weight of the absorbent. Other materials like silicas and pharmasorb clays may be able to absorb 20% to 80% of the weight of the absorbent.

The general procedure for absorbing the physiological cooling agents onto the absorbent is as follows. An absorbent like fumed silica powder can be mixed in a powder blender and a solution of the physiological cooling agents can be sprayed onto the powder as mixing continues. The solution can be 5% to 30% cooling agent, and higher levels may be used if higher temperatures are used. Generally water is the solvent, but other solvents like alcohol should also be used if approved for use in food. As the powder mixes, the liquid is sprayed onto the powder. Spraying is stopped before the mix becomes damp. The still flowing powder is removed from the mixer and dried to remove the water or other solvent, and ground to a specific particle size.

After the physiological cooling agents are absorbed onto an absorbent or fixed onto an absorbent, the fixative/cooling agents can be coated by encapsulation. Either full or partial encapsulation may be used, depending on the coating composition used in the process. Full encapsulation may be obtained by coating with a polymer as in spray drying, spray chilling, fluid-bed coating, extrusion, coacervation, or any other standard technique. A partial encapsulation or coating can be obtained by agglomeration of the fixative/cooting agents mixture using any of the materials discussed above.

The physiological cooling agents can be treated to modify their release by being entrapped in an extrusion process. Examples of such extrusion processes are disclosed in U.S. Patent No. 5,128,155 and PCT Publication No. WO 94/06308.

The four methods to use to obtain a modified release of physiological cooling agents are (1) encapsulation by spray drying, fluid-bed coating, spray chilling and coacervation to give full or partial encapsulation; (2) agglomeration to give partial encapsulation; (3) fixation or absorption which also gives partial encapsulation; and (4) entrapment by extrusion. These four methods, combined in any usable manner which physically isolates the physiological cooling agents, modifies their dissolvability or modifies the release of physiological cooling agents are included in this invention.

The previously described cooling flavor compositions and encapsulated, agglomerated or absorbed physiological cooling agents may readily be incorporated into a chewing gum composition. Generally the physiological cooling agents will be added to the gum in either the form of a cooling flavor composition or as part of a modified release combination of physiological cooling agents. However, both of these aspects may be used in the same gum formula, and the cooling flavor composition itself or its individual components may be treated to have a modified release. The remainder of the chewing gum ingredients are noncritical to the present invention That is, the cooling flavor composition and/or coated particles of physiological cooling agents can be incorporated into conventional chewing gum formulations in a conventional manner. Naturally, the preferred chewing gum formulation is a sugarless formulation. However, the physiological cooling agents may also be used in a sugar chewing gum. The cooling flavor composition and coated physiological cooling agents may be used in either regular chewing gum or bubble gum.

With coatings of chewing gum, the concentration of physiological cooling agent will depend on the intensity of the physiological cooling agent and the desired cooling effect. In general the concentration of cooling agents used is between 0.001% and 1% by weight of coating. The preferred concentration of cooling agent is between 0.01% and 0.5%, more preferably between 0.02% and 0.2%.

One or more flavors may be added to the syrup used to make the coating, or applied to the gum center while the syrup coating is drying, or after the coating has dried. Furthermore, the flavor may be applied anywhere within the sequence of coats, for example, after the third, twelfth, eighteenth, etc., coats.

These flavors include any flavor which is of food acceptable quality, including the flavors described earlier for use in chewing gum. The flavor can be added to the coating syrup in an amount such that the coating will contain from 0.2% to 1.2% flavor and preferably from 0.7% to 1.0% flavor.

For menthol flavored coatings, this concentration of physiological cooling agent allows a reduced overall concentration of menthol. However, it does not completely eliminate menthol, because menthol has a very identifiable unique taste and cooling sensation. Hence, in the case of menthol flavor, the physiological cooling agents only enhance the cooling while reducing the menthol bitterness.

Artificial sweeteners contemplated for use in the coating include but are not limited to synthetic substances, saccharin, thaumatin, alitame, saccharin salts, aspartame, sucralose and acesulfame-K. The artificial sweetener may be added to the coating syrup in an amount such that the coating will contain from 0.05% to 0.3%, and preferably from 0.10% to 0.15% artificial sweetener.

Dispersing agents are often added to syrup coatings for the purpose of whitening and tack reduction. Dispersing agents contemplated by the present invention to be employed in the coating syrup include titanium dioxide, talc, or any other antistick compound. Titanium dioxide is a presently preferred dispersing agent of the present invention. The dispersing agent may be added to the coating syrup in amounts such that the coating will contain from 0.1 % to 1.0%, and preferably from 0.3% to 0.6% of the agent

Coloring agents are preferably added directly to the syrup in the dye or lake form. Coloring agents contemplated by the present invention include food quality dyes. Film formers preferably added to the syrup include methyl cellulose, gelatins, hydroxypropyl cellulose, ethyl cellulose, hydroxyethyl cellulose, carboxymethyl cellulose and the like and combinations thereof. Binding agents may be added either as an initial coating on the chewing gum center or may be added directly into the syrup. Binding agents contemplated by the present invention include gum arabic, alginate, cellulosics, vegetable gums and the like.

Conventional panning procedures generally use sucrose as the coating material, but recent advances in panning have allowed the use of other carbohydrate materials to be used in the place of sucrose Some of these components include, but are not limited to, dextrose, maltose, erythritol, xylitol, hydrogenated isomaltulose, maltitol and other new polyols or a combination thereof.

The coating material may be blended with panning modifiers including, but not limited to, gum arabic, maltodextrins, corn syrup, gelatin, cellulose type materials like carboxymethyl cellulose or hydroxymethyl cellulose, starch and modified starches, vegetable gums like alginates, locust bean gum, guar gum and gum tragacanth, insoluble carbonates like calcium carbonate or magnesium carbonate, and talc. Antitack agents may also be added as panning modifiers, which allow the use of a variety of carbohydrates and sugar alcohols to be used in the development of new panned or coated gum products.

The chewing gum center of the present invention follows the general pattern outlined below. These centers may contain physiological cooling agents as an ingredient.

In general, a chewing gum center compositions or other chewing gum compositions typically contain a chewable gum base portion which is essentially free of water and is water-insoluble, a water-soluble bulk portion and flavors which are typically water insoluble. The water-soluble portion dissipates with a portion of the flavor over a period of time during chewing. The gum base portion is retained in the mouth throughout the chew.

The insoluble gum base generally comprises elastomers, elastomer solvents, plasticizers, waxes, emulsifiers and inorganic fillers. Plastic polymers, such as polyvinyl acetate, which behave somewhat as plasticizers, are also often included. Other plastic polymers that may be used include polyvinyl laureate, polyvinyl alcohol and polyvinyl pyrrolidone.

Elastomers may include polyisobutylene, butyl rubber, (isobutylene-isoprene copolymer) and styrene butadiene rubber, as well as natural latexes such as chide. Elastomer solvents are often resins such as terpene resins. Plasticizers, sometimes called softeners, are topically fats and oils, including tallow, hydrogenated and partially hydrogenated vegetable oils, and coca butter. Commonly employed waxes include paraffin, microcrystalline and natural waxes such as beeswax and carnauba. Microcrystalline wares, especially those with a high degree of crystallinity, may be considered bodying agents or textural modifiers.

According to the preferred embodiment of the present invention, the insoluble gum base constitutes between 5% to 95% by weight of the gum. More preferably the insoluble gum base comprises between 10% and 50% by weight of the gum and most preferably 20% to 35% by weight of the gum.

The gum base typically also includes a filler component. The filler component may be calcium carbonate, magnesium carbonate, talc, dicalcium phosphate or the like. The filler may constitute between 5% and 60% by weight of the gum base. Preferably the filler comprises 5% to 50% by weight of the gum base.

Gum bases typically also contain softeners including glycerol monostearate and glycerol triacetate. Gum bases may also contain optional ingredients such as antioxidants, colors, and emulsifiers. The present invention contemplates employing any commercially acceptable gum base.

The water-soluble portion of the chewing gum may further comprise softeners, sweeteners, flavors, physiological cooling agents and combinations thereof. The sweeteners often fulfill the role of bulking agents in the gum. The bulking agents typically comprise 5% to 95% of the gum composition.

Softeners are added to the chewing gum in order to optimize the chewability and mouth feel of the gum. Softeners, also known in the art as plasticizers or plasticizing agents, generally constitute between 0.5% to 15% of the chewing gum. Softeners contemplated by the present invention include glycerin, lecithin and combinations thereof. Further, aqueous sweetener solutions such as those containing sorbitol, hydrogenated starch hydrolysate, corn syrup and combinations thereof may be used as softeners and binding agents in gum.

As mentioned above, the cooling flavor compositions or coated physiological cooling agents of the present invention will most likely be used in sugarless gum formulations. However, formulations containing sugar are also within the scope of the invention. Sugar sweeteners generally include saccharide-containing components commonly known in the chewing gum art which comprise, but are not limited to, sucrose, dextrose, maltose, dextrin, dried invert sugar, fructose, galactose, corn syrup solids and the like, alone or in any combination.

The cooling flavor compositions and coated physiological cooling agents of the present invention can also be used in combination with sugarless sweeteners. Generally sugarless sweeteners include components with sweetening characteristics but which are devoid of the commonly known sugars and comprise, but are not limited to, sugar alcohols such as sorbitol, hydrogenated isomaltulose, mannitol, xylitol, lactitol, erythintol, hydrogenated starch hydrolysate, maltitol and the like alone or in any combination.

Depending on the particular sweetness release profile and shelf-stability needed, coated or uncoated high-intensity sweeteners may be used in the chewing gum center or in the coating. High-intensity sweeteners, preferably aspartame, may be used at levels from 0.01% to about 3.0%. Encapsulated aspartame is a high intensity sweetener with improved stability and release characteristics, as compared to free aspartame. Free aspartame can also be added, and a combination of some free and encapsulated aspartame is preferred when aspartame is used.

Optional ingredients such as colors, emulsifiers and pharmaceutical agents may also be added as separate components of the chewing gum composition, or added as part of the gum base.

Aqueous syrups, such as corn syrup and hydrogenated corn syrup may be used, particularly if their moisture content is reduced. This can preferably be done by coevaporating the aqueous syrup with a plasticizer, such as glycerin or propylene glycol, to a moisture content of less than 10%. Preferred compositions include hydrogenated starch hydrolysate solids and glycerin. Such syrups and their methods of preparation are discussed in detail in U.S. Patent No. 4,671,967.

A preferred method of manufacturing chewing gum is by sequentially adding the various chewing gum ingredients to any commercially available mixer known in the art. After the ingredients have been thoroughly mixed, the gum is discharged from the mixer and shaped into the desired form such as by rolling into sheets and cutting into sticks, extruding into chunks, or casting into pellets.

Generally, the ingredients are mixed by first melting the gum base and adding it to the running mixer. the base may also be melted in the mixer itself. Color or emulsifiers may also be added at this time, along with syrup and a portion of the bulking agent. Further portions of the bulking agent may then be added to the mixer. A flavoring agent is typically added with the final portion of the bulking agent. The cooling flavor composition of the present invention are preferably added as part of the flavor addition. The coated physiological cooling agents of the present invention are preferably added after the final portion of bulking agent and flavor have been added. The entire mixing procedure typically takes from five to fifteen minutes, but longer mixing times may sometime be required. Those skilled in the art will recognize that many variations of the above described procedures may be hollowed.

When the physiological cooling agent is used as part of a cooling flavor composition, using menthol and menthone, the cooling flavor composition will contain preferably 40% to 80%, and more preferably 50% to 70%, menthol, and 15% to 50%, and more preferably 20% to 40%, menthone. In the preferred cooling flavor composition, the ratio of menthol to menthone is preferably between about 4:5 and about 16:3. The ratio of physiological cooling gents to the total of menthol and menthone is preferable between 3:97 and 1:4. Typically this will mean 3% to 25%, and more preferably 4% to 15% of the cooling composition will be one or more physiological cooling agents. The preferred physiological cooling agents are: menthyl succinate; N-2,3-trimethyl-2-isopropyl butanamide; menthyl lactate; 3-1-menthoxypropane-1,2-diol; N-substituted p-menthane carboxamide; menthone glycerol ketals and mixture thereof.

If another flavor is used in the gum, or other oral composition, beside the cooling flavor composition, the cooling flavor composition outlined above may be mixed with the other flavor. In addition, some components of the cooling flavor composition may be mixed with the other flavor, and some components added separately to the gum. However, it is preferred that any other flavor and the cooling flavor composition be premixed before being added to the gum.

Once formed, the chewing gum center can be coated. The coating is initially present as a liquid Syrup which contains from 30% to 80% or 85% of the coating ingredients previously described herein, and from 15% or 20% to 70% of a solvent such as water. In general, the coating process is carried out in conventional panning equipment. Sugarless gum center tablets to be coated are placed into the panning equipment to form a moving mass.

The material or syrup which will eventually form the coating is applied or distributed over the gum center tablets. Flavors may be added before, during and after applying the syrup to the gum centers. Once the coating has dried to form a hard surface, additional syrup additions can be made to produce a plurality of coatings or multiple layers of coating.

In the panning procedure, syrup is added to the gum center tablets at a temperature range of from 37.7 to 115.6°C (100°F. to 240°F). Preferably, the syrup temperature is from 60 to 93.3°C (140°F. to 200°F). Most preferably the syrup temperature should be kept constant throughout the process in order to prevent the polyol in the syrup from crystallizing. The syrup may be mixed with, sprayed upon, poured over, or added to the gum center tablets in any way known to those skilled in the art.

In another preferred embodiment, a soft coating is formed by adding a powder coating after a liquid coating. The powder coating may include natural carbohydrate gum hydrolysates, maltodextrin, gelatin, cellulose derivatives, starches, modified starches, sugars, sugar alcohols, natural carbohydrate gums and fillers like talc and calcium carbonate.

Each component of the coating on the gum center may be applied in a single layer or in a plurality of layers. In general, a plurality of layers is obtained by applying single coats, allowing the layers to dry, and then repeating the process. The amount of solids added by each coating step depends chiefly on the concentration of the coating syrup. Any number of coats may be applied to the gum center Tablet Preferably, no more than 75 coats are applied to the gum center. More preferably, less than about 60 coats are applied and most preferably, 30 to 60 coats are applied. In any event, the present invention contemplates applying an amount of syrup sufficient to yield a coated chewing gum product containing 10% to 65% coating. Preferably, the final product will contain from 20% to 50% coating.

Those skilled in the art will recognize that in order to obtain a plurality of coated layers, a plurality of premeasured aliquots of coating syrup may be applied to the gum center, It is contemplated, however, that the volume of aliquots of syrup applied to the gum center may vary throughout the coating procedure.

Once a coating of syrup is applied to the gum center, the present invention contemplates drying the wet syrup in an inert medium. A preferred drying medium comprises air. Preferably, forced drying air contacts the wet syrup coating in a temperature range of from 21.1 to 43.3°C (70°F to 110°F). More preferably, the drying air is in the temperature range of from 26.7 to 37.7°C (80°F to 100°F). The invention also contemplates that the drying air possess a relative humidity of less than 15 percent Preferably, the relative humidity of the drying air is less than 8 percent.

The drying air may be passed over and admixed with the syrup coated gum centers in any way commonly known in the art. Preferably, the drying air is blown over and around the syrup coated gum center at a flow rate, for large scale operations, of 79.3 m³ per minute (2800 cubic feet per minute). If lower quantities of material are being processed, or if smaller equipment is used, lower flow rates would be used. If a flavor is applied after a syrup coating has been dried, the present invention contemplates drying the flavor with or without the use of a drying medium.

### EXAMPLES

The following four ingredients can be mixed with flavors and used in chewing gum formulations. The percentage listed are percentages of the total of these four ingredients. However, the ingredients were not mixed together first, but were added individually to the flavor used in the gum. The four ingredients in combination are referred to herein as cooling blends A, B and C.

| | **A** | **B** | **C** |
|---|---|---|---|
| Menthol | 52.5 | 60.2 | 62.5 |
| Menthone | 25.8 | 30.6 | 31.2 |
| Menthyl succinate | 14.5 | 6.1 | 4.2 |
| Menthyl lactate | 7.2 | 3.1 | 2.1 |

### Examples 1 and 2

Cooling blend A may be mixed with a cherry flavor and used to make two cherry flavored sugarless gum formulas. Both products would have a slightly minty flavor with cherry. When a peppermint flavor is used in place of the cooling blend in comparable formulas, the minty character is too strong. The cooling blend gives a high quality cool cherry mint flavored product as formulated below:

**TABLE 1**

| | **Example 1** | **Example 2** |
|---|---|---|
| Sorbitol | 49.51 | 51.44 |
| Base | 28.50 | 25.00 |
| Glycerin | 12.00 | 12.00 |
| Cherry Flavor | 3.0848 | 2.8848 |
| Cooling Blend A | 0.1152 | 0.1152 |
| Spray Dried Cherry Flavor | 0.30 | - |
| Xylitol | 1.50 | 4.50 |
| Fumeric, Citric, and Adipic Acids | 2.10 | 2.10 |
| Encapsulated Sweeteners | 1.36 | 1.36 |
| Salt Solution | 0.75 | - |
| Color | 0.28 | 0.30 |
| Lecithin | 0.50 | 0.30 |
| **TOTAL** | **100.00** | **100.00** |

### Examples 3, 4 and 5

Cooling blend B may be used in a sugarless wintergreen flavored chewing gum to give improved cooling without mint flavor according to the following formulas:

**TABLE 2**

| | **Example 3** | **Example 4** | **Example 5** |
|---|---|---|---|
| Sorbitol | 49.60 | 50.01 | 48.76 |
| Base | 25.10 | 25.10 | 25.10 |
| Glycerin | 14.00 | 6.00 | 14.00 |
| Maltitol | 5.00 | 7.00 | 10.00 |
| Coevaporated Glycerin/Lycasin* | 3.50 | 9.50 | - |
| Wintergreen Flavor | 1.1296 | 1.1296 | 1.1296 |
| Cooling Blend B | 0.4704 | 0.4704 | 0.4704 |
| Encapsulated Wintergreen Flavor | 0.1625 | 0.1625 | - |
| Encapsulated Menthol | 0.0875 | 0.0875 | - |
| Encapsulated Sweeteners | 0.54 | 0.54 | 0.54 |
| Salt Solution** | 0.28 | - | - |
| Color | 0.13 | - | - |
| **TOTAL** | **100.00** | **100.00** | **100.00** |

| | | | |
|---|---|---|---|
| * Contains 25% glycerin, 67.5% Lycasin brand hydrogenated starch hydrolsate solids and 7.5% water. ** Contains 10% NaCl and 90% water. | | | |

### Examples 6 through 10

Cooling blend C was used in spearmint and peppermint flavored chewing gums of Examples 6 through 10 to give improved cooling with mint flavor. The increased cooling yielded products with less bitterness and harshness, and gave good minty tasting products. The following formulas were made:

**TABLE 3**

| | **Example 6** | **Example 7** | **Example 8** | **Example 9** | **Example 10** |
|---|---|---|---|---|---|
| Sorbitol | 47.21 | 48.60 | 32.76 | 48.41 | 40.60 |
| Base | 25.00 | 25.00 | 37.35 | 25.00 | 30.00 |
| Glycerin | 6.00 | 11.40 | 12.00 | 8.00 | 10.00 |
| Coevaporated | 9.50 | 7.67 | - | 9.50 | 3.50 |
| Glycerin/Lycasin* | | | | | |
| Maltitol^{A}/Mannitol^{B} | 10.00^{A} | 5.00^{A} | 3.07^{B} | 5.00^{B} | 7.00^{B} |
| Spearmint Flavor | 1.0908 | 1.0908 | - | - | - |
| Cooling Blend C | 0.2592 | 0.2592 | 0.7425 | 0.7425 | 0.40 |
| Peppermint Flavor | - | - | 1.5075 | 1.5075 | 1.60 |
| Lecithin | 0.30 | 0.30 | 0.40 | 0.30 | 0.30 |
| Calcium | - | - | 9.66 | - | 5.00 |
| Carbonate | | | | | |
| Encapsulated | - | 0.20 | 1.50 | 1.00 | 1.00 |
| Menthol | | | | | |
| Encapsulated | 0.54 | 0.34 | 0.34 | 0.54 | - 0.60 |
| Sweetener | | | | | |
| Salt Solution** | 0.10 | 0.1 | 0.67 | - | - |
| Color | - | 0.04 | - | - | - |
| **TOTAL** | **100.00** | **100.00** | **100.00** | **100.00** | **100.00** |

| | | | | | |
|---|---|---|---|---|---|
| * Contains 25% glycerin, 67.5% Lycasin brand hydrogenated starch hydrolsate solids and 7.5% water. ** Contains 10% NaCl and 90% water. | | | | | |

## Claims

1. A cooling flavor composition which imparts a physiological cooling effect to oral compositions in which it is used, comprising:
40% to 80% by weight menthol;
15% to 50% by weight menthone; and
3% to 25% by weight of at least one physiological cooling agent selected from the group consisting of menthyl succinate; menthyl lactate; 3-1-menthoxypropane-1,2-diol; N-substituted p-menthane carboxamides; acyclic carboxamides; menthone glycerol ketals and mixtures thereof, wherein the cooling flavor composition does not impart a peppermint flavor to the oral composition.

2. The cooling flavor composition of claim 1 wherein the composition comprises at least two physiological cooling agents selected from the group consisting of menthyl succinate; menthyl lactate;
3-1-menthoxypropane-1,2-diol; N-substituted p-menthane carboxamides; acyclic carboxamides; menthone glycerol ketals and mixtures thereof.

3. The cooling flavor composition of claim 2 wherein said at least two physiological cooling agents comprise, by weight of the cooling flavor composition:
a) 1% to 10% menthyl lactate, and
b) 2% to 15% menthyl succinate.

4. An oral composition comprising a flavor and a cooling flavor composition as defined in claim 1.

5. The oral composition of claim 4 wherein the oral composition is a chewing gum.

## Patentansprüche

1. Zusammensetzung mit kühlendem Geschmack, die den sie verwendenden oralen Zubereitungen eine physiologisch kühlende Wirkung vermittelt, enthaltend:
40 bis 80 Gew.-% Menthol;
15 bis 50 Gew.-% Menthon; und
3 bis 25 Gew.-% mindestens eines physiologisch kühlenden Mittels, ausgewählt aus der Gruppe, bestehend aus Menthylsuccinat; Menthyllactat; 3-1-Menthoxypropan-1,2-diol; N-substituierten p-Menthancarboxamiden; acyclischen Carboxamiden; Methonglycerolketalen und Gemischen davon, wobei die Zusammensetzung mit kühlendem Geschmack der oralen Zubereitung keinen Pfefferminzgeschmack vermittelt.

2. Zusammensetzung mit kühlendem Geschmack nach Anspruch 1, wobei die Zusammensetzung mindestens zwei physiologisch kühlende Wirkstoffe, ausgewählt aus der Gruppe, bestehend aus Menthylsuccinat; Menthyllactat; 3-1-Menthoxypropan-1,2-diol; N-substituierten p-Menthancarboxamiden; acyclischen Carboxamiden; Methonglycerolketalen und Gemischen davon enthält.

3. Zusammensetzung mit kühlendem Geschmack nach Anspruch 2, wobei die mindestens zwei physiologisch kühlenden Wirkstoffe per Gewicht der Zusammensetzung mit kühlendem Geschmack enthalten:
a) 1% bis 10% Menthyllactat, und
b) 2% bis 15% Menthylsuccinat.

4. Orale Zubereitung, umfassend eine Zusammensetzung mit einem Geschmack und mit einem kühlenden Geschmack, wie in Anspruch 1 definiert.

5. Orale Zubereitung nach Anspruch 4, wobei die orale Zubereitung ein Kaugummi ist.

## Revendications

1. Composition d'arôme rafraîchissant qui confère un effet rafraîchissant physiologique à des compositions orales dans lesquelles elle est utilisée, comprenant :
40 % à 80 % en poids de menthol ;
15 % à 50 % en poids de menthone ; et
3 % à 25 % en poids d'au moins un agent rafraîchissant physiologique choisi dans le groupe consistant en le succinate de menthyle ; le lactate de menthyle ; le 3,1-menthoxypropane-1,2-diol ; des p-menthanecarboxamides N-substitués ; des carboxamides acycliques ; des menthaneglycérolcétals et leurs mélanges, ladite composition d'arôme rafraîchissant ne conférant pas d'arôme de menthe poivrée à la composition orale.

2. Composition d'arôme rafraîchissant suivant la revendication 1, qui comprend au moins deux agents rafraîchissants physiologiques choisis dans le groupe consistant en le succinate de menthyle ; le lactate de menthyle ; le 3,1-menthoxypropane-1,2-diol ; des p-menthanecarboxamides N-substitués ; des carboxamides acycliques ; des menthoneglycérolcétals et leurs mélanges.

3. Composition d'arôme rafraîchissant suivant la revendication 2, dans laquelle lesdits au moins deux agents rafraîchissants physiologiques comprennent, en poids, de la composition d'arôme rafraichissant :
a) 1 % à 10 % de lactate de menthyle ; et
b) 2 % à 15 % de succinate de menthyle.

4. Composition orale comprenant un arôme et une composition d'arôme rafraîchissant telle que définie dans la revendication 1.

5. Composition orale suivant la revendication 4, ladite composition orale étant une gomme à mâcher.
